# EUROPÄISCHE PATENTSCHRIFT

(11) **EP 2 388 561 B1**
(45) Veröffentlichungstag und Bekanntmachung des Hinweises auf die Patenterteilung: **02.12.2015**
(21) Anmeldenummer: 10163365.9
(22) Anmeldetag: 20.05.2010
(51) Int. Cl.: G01G 19/00, G01G 21/00, G01G 23/00

(54) **Laborgerät zur Probenvorbereitung**
Laboratory device for sample preparation
Appareil de laboratoire pour la préparation d'échantillons

(43) Veröffentlichungstag der Anmeldung: 23.11.2011
(73) Patentinhaber: Mettler-Toledo AG, 8606 Greifensee (CH)
(72) Erfinder: Lüchinger, Paul, 8610 Uster (CH)

(56) Entgegenhaltungen:
- AU-A1- 2008 200 146
- DE-A1-102007 006 553
- US-A- 5 187 976
- US-A- 5 398 556
- US-A- 5 606 153
- US-A1- 2004 175 295

## Beschreibung

Die vorliegende Erfindung bezieht sich auf ein Laborgerät zur Bereitstellung von Proben.

Ein wesentlicher Verfahrensschritt im Labor bei der Analyse von Substanzen und Materialien ist die Vorbereitung der Probe. Dieser Vorbereitungsschritt ist oft sehr zeitintensiv und aufwändig, da zur Analyse einer Substanz üblicherweise mehrere Proben zur Verifizierung der Messresultate vorbereitet werden müssen. In den meisten Fällen sind bis zu einem dutzend Proben pro Substanz in Zielgefässe einzuwägen, diesen ein Lösungsmittel hinzuzufügen und die Zielgefässe zu verschliessen.

Die Probenvorbereitung wird zunehmend automatisiert um die Vorbereitungszeit zu verkürzen und mögliche Fehler auszuschliessen, wie sie bei der manuellen Vorbereitung vorkommen können. Bei der automatisierten Probenvorbereitung werden meistens eine Grundplattform mit einzelnen Behandlungsstationen und ein zwei- oder dreiachsiges Robotersystem eingesetzt. Solche multifunktionale Laborgeräte werden beispielsweise in der EP 1 674 393 B1, AU 2008200146 A1, US 2004/0175295 A1 und US 5398556 offenbart. Diese Laborgeräte weisen aber den Nachteil auf, dass sie im Verhältnis zu einer Laborwaage, auf welcher üblicherweise die Probenvorbereitung manuell durchgeführt wird, einen hohen Flächenbedarf erfordern. Sofern toxische Substanzen verarbeitet werden müssen, wird die Laborwaage in eine Arbeitskabine mit einer Absaugvorrichtung gestellt und die Probenvorbereitung wird dort durchgeführt. Die vorangehend beschriebenen Robotersysteme sind aber meistens zu gross, weshalb sie eine eigene, das ganze System umschliessende Schutzkabine aufweisen. Dementsprechend kosten diese multifunktionalen Laborgeräte ein Vielfaches einer Laborwaage. Ferner ist der Reinigungsaufwand dieser Systeme alleine durch die räumliche Ausdehnung des von der Schutzkabine umschlossenen Bereitstellungsraums erheblich, weshalb bei einer geringen Zahl bereitzustellender Proben nach wie vor auf die automatisierte Probenvorbereitung verzichtet wird. Dagegen kann der Bereitstellungsraum einer Laborwaage, welcher durch ihren Windschutz abgegrenzt ist, schnell und einfach gereinigt werden.

Um den Nachteilen des grossen Raumbedarfs Rechnung zu tragen, sind im Stand der Technik kompakte Laborgeräte bekannt, wie beispielsweise die in der EP 1 959 244 A1, Figuren 7 und 8 offenbarten Laborgeräte. Durch die Anordnung mehrerer Dosiervorrichtungen nebeneinander können auf einfache Weise automatisch Pulvermischungen hergestellt werden. Allerdings erfordern auch diese Laborgeräte einen zur Laborwaage vergleichsweise grossen Raumbedarf, wenn eine Arbeitskabine diese umschliessen soll. Ferner ist der Reinigungsaufwand des im Bereitstellungsraum angeordneten Laborgeräts nach wie vor gross.

Aufgabe der vorliegenden Erfindung ist daher, ein Laborgerät zur Bereitstellung von Proben der vorangehend beschriebenen Art zu schaffen, dessen Bereitstellungsraum möglichst klein gehalten ist.

Diese Aufgabe wird mit einem Laborgerät gelöst, welches die im unabhängigen Patentanspruch angegebenen Merkmale aufweist.

Ein Laborgerät zur Bereitstellung von Proben umfasst ein Grundgehäuse mit einem durch Schutzwände umschlossenen Bereitstellungsraum sowie mindestens einen am Grundgehäuse um eine Drehachse drehbar gelagert angeordneten Multifunktionskopf. Dieser weist mindestens zwei definierte Funktionspositionen auf, wobei jede dieser Funktionspositionen mittels einer Drehung des Multifunktionskopfs zu mindestens einer im Bereitstellungsraum angeordneten Gefässaufnahme ausrichtbar ist. Auf die Gefässaufnahme kann ein Zielgefäss aufgesetzt werden, in welchem hernach die Probe eingefüllt und vorbereitet wird. Die erste Funktionsposition beinhaltet eine Aufnahmevorrichtung zur Aufnahme einer Dosiervorrichtung mit fliessfähigem Dosiergut und jede weitere Funktionsposition weist je eine weitere Vorrichtung auf. Dies können wie weiter unten beschrieben, weitere Aufnahmevorrichtungen, aber auch Vorrichtungen mit anderen Funktionen sein. Mindestens eine Schutzwand weist einen Durchbruch auf, wobei der mindestens eine Multifunktionskopf partiell im Durchbruch angeordnet ist, so dass ein Teil des Multifunktionskopfs ausserhalb des Bereitstellungsraums und der andere Teil des Multifunktionskopfs innerhalb des Bereitstellungsraums angeordnet ist. Je nach Auslegung des Multifunktionskopfs kann dieser um 360° gedreht oder auch nur teilweise gedreht werden.

Durch diese Anordnung gelingt es, den Bereitstellungsraum sehr klein auszugestalten, wodurch die Reinigungsarbeiten nur auf diesen kleinen Raum beschränkt sind. Ferner ist immer ein Teil des Multifunktionskopfs ausserhalb des Bereitstellungsraumes und damit die in diesem Teil angeordneten Funktionspositionen zugänglich. Beispielsweise kann bei zwei vorhandenen Aufnahmevorrichtungen, die jeweils ausserhalb des Bereitstellungsraumes befindliche Aufnahmevorrichtung mit einer Dosiervorrichtung bestückt werden, während mit der anderen, im Bereitstellungsraum befindliche Dosiervorrichtung Dosiergut in das Zielgefäss eindosiert wird.

Im Grundgehäuse kann ferner eine Wägezelle angeordnet sein, wobei mindestens eine Gefässaufnahme mit der Wägezelle kraftübertragend verbunden ist. Gerade in dieser Ausführung bietet die erfindungsgemässe Ausgestaltung enorme Vorteile, da der Bereitstellungsraum ein sehr kleines Volumen aufweist und daher die in diesem Raum eingeschlossene Luft rasch an Bewegungsenergie verliert, wenn sie durch Veränderungen im Bereitstellungsraum bewegt wird. Dies kann beispielsweise beim Auflegen oder Entfernen eines Zielgefässes geschehen. Die Drehbewegung des Multifunktionskopfs verursacht ebenfalls ausserordentlich wenige Luftbewegungen, da während des Drehvorgangs an diesem kaum vorstehende Teile vorhanden sein dürfen, welche die Luftmasse im Bereitstellungsraum in Bewegung versetzen. Ferner kann wie oben erwähnt, der Multifunktionskopf während des Betriebes, folglich während die Probenvorbereitung abläuft bestückt werden, ohne dass der Bereitschaftsraum geöffnet werden muss. Da diese Bestückungsbewegungen ausserhalb des Bereitstellungsraumes erfolgen, verursachen sie auch keine Luftbewegungen im Bereitstellungsraum. Die durch die Erfindung geschaffenen optimalen Verhältnisse im Bereitstellungsraum erlauben den Einsatz hochauflösender Wägezellen, mittels derer die ins Zielgefäss eindosierten Mengen nahezu in Echtzeit erfasst und an die Steuerung der Dosiervorrichtung übertragen werden können. Unter hochauflösenden Wägezellen sind Vorrichtungen zu verstehen, mittels derer die Masse eines Wägegutes bis auf ein Mikrogramm genau gemessen werden kann.

Selbstverständlich können auch mehrere Wägezellen im Grundgehäuse angeordnet und mit je einer Gefässaufnahme verbunden sein. Und selbstverständlich sind auch mehrere Multifunktionsköpfe am Grundgehäuse anordnenbar.

Die Drehachse des mindestens einen Multifunktionskopfs kann räumlich beliebig angeordnet werden, vorzugsweise ist sie aber horizontal oder vertikal angeordnet.

Es ist nicht zwingend erforderlich, dass der Durchbruch nur in einer Schutzwand ausgebildet ist. Je nach der Anzahl Funktionspositionen und dadurch der Grösse des Multifunktionskopfs, kann sich der mindestens eine Durchbruch in mindestens zwei anliegende Schutzwände erstrecken.

Sofern das Laborgerät automatisch mit Zielgefässen bestückt werden soll, kann der Multifunktionskopf zur zumindest teilweisen Freigabe der Öffnung des Durchbruchs linear verschiebbar und/oder verschwenkbar ausgebildet sein. Durch die Freigabe des Durchbruchs kann ein Greifer eines Laborroboters die Gefässaufnahme des Laborgeräts erreichen, ohne dass eine der Schutzwände geöffnet werden muss.

Der Multifunktionskopf muss aber zur teilweisen Freigabe der Öffnung des Durchbruchs nicht zwingend verschiebbar oder verschwenkbar ausgebildet sein. Alternativ dazu kann der Multifunktionskopf auch eine weitere Funktionsposition mit einer Freistellung aufweisen. Diese Freistellung wird zur Freigabe des Durchbruchs in die entsprechende Lage gebracht, so dass ein Greifer eines Laborroboters durch diese Freistellung in den Bereitstellungsraum hineinreichen kann.

Der Multifunktionskopf kann ferner eine erste Ebene und mindestens eine zweite Ebene aufweisen, die orthogonal zur Drehachse angeordnet sind. Mindestens eine erste Funktionsposition ist in der ersten Ebene und eine weitere Funktionsposition in der mindestens zweiten Ebene am Multifunktionskopf ausgebildet. Sowohl die erste Ebene wie auch die zweite Ebene können durch lineares Verschieben des Multifunktionskopfs entlang seiner Drehachse in Übereinstimmung mit der Gefässaufnahme gebracht werden. Es ist auch denkbar, dass der Multifunktionskopf in mehrere Abschnitte unterteilt ist, wobei jeder Abschnitt eine Ebene enthält und die einzelnen Abschnitte unabhängig voneinander um die gemeinsame Drehachse drehbar sind.

Selbstverständlich können eine oder mehrere Schutzwände auch relativ zum Grundgehäuse verschiebbar oder verschwenkbar ausgebildet sein, so dass der Bereitstellungsraum über geöffnete Schutzwände erreichbar ist.

Wie aus den vorangehenden Erläuterungen ersichtlich ist, schliesst der Multifunktionskopf während der meisten Betriebsvorgänge den Durchbruch und damit den Bereitstellungsraum zur Umgebung des Laborgeräts ab. Dadurch ist der Multifunktionskopf nicht nur eine Wechselvorrichtung oder ein Prozesskopf mit mehreren Funktionen, sondern bildet gleichzeitig auch einen Teil der Schutzwände. Um einen noch besseren Abschluss des Bereitschaftsraums zu erwirken, kann im Bereich des Durchbruchs eine Dichtungsvorrichtung angeordnet sein. Diese Dichtungsvorrichtung dichtet vorzugsweise sämtliche Lücken, Freistellungen und Spalten ab, welche zwischen der Schutzwand und dem Multifunktionskopf zwangsläufig vorhanden sind.

Die Dichtungsvorrichtung kann eine zwischen der Schutzwand und dem Multifunktionskopf angeordnete elastische Dichtungsleiste, Dichtungsbürste oder Dichtungsrolle sein.

Alternativ dazu kann die Dichtungsvorrichtung auch eine Haube oder ein Deckel sein, welche den Durchbruch abdeckt und denjenigen Teil des Multifunktionskopfs, welcher ausserhalb des Bereitstellungsraums angeordnet ist, überspannt. Selbstverständlich sind auch Kombinationen beider Dichtungssysteme denkbar.

Ferner kann im Bereich der Dichtungsvorrichtung eine Reinigungsvorrichtung zur Reinigung des Multifunktionskopfs und/oder der Dichtungsvorrichtung angeordnet sein. Beispielsweise kann diese Reinigungsvorrichtung eine Absaugvorrichtung, eine Absaugvorrichtung mit zusätzlichen Blasdüsen, rotierende Bürsten und dergleichen sein.

Damit während des Wechsels der Funktionsposition, das heisst während sich der Multifunktionskopf dreht, der Spalt zwischen dem Multifunktionskopf und der Schutzwand minimal ist oder die Dichtungsvorrichtung immer am Multifunktionskopf anliegt, kann dieser eine zylindrische Grundform aufweisen. Dies ist insbesondere dann vorteilhaft, wenn feinste pulverförmige, trockene, toxische Substanzen dosiert werden müssen und diese zwar den Bereitstellungsraum kontaminieren, aber nicht in die Umgebung gelangen dürfen. Selbstverständlich kann der Multifunktionskopf auch beliebige Querschnittformen aufweisen, vorzugsweise aber solche, bei denen der Multifunktionskopf im Durchbruch mindestens eine volle Umdrehung machen kann.

Die weiteren Funktionspositionen eines Multifunktionskopfs können eine Vielzahl unterschiedlichster Vorrichtungen aufweisen, beispielsweise eine weitere Aufnahmevorrichtung für eine Dosiervorrichtung, eine elektrooptische Einheit zur Identifizierung und/oder Positionierung eines Zielgefässes auf der Gefässaufnahme, eine Vorrichtung zum Entfernen beziehungsweise Aufsetzen des Verschlusses eines Zielgefässes, ein Greifer zum Ergreifen von Objekten, eine Flüssigkeitsdosiervorrichtung, eine Aufnahmevorrichtung für eine Flüssigkeitsdosiervorrichtung oder zumindest die Auslassöffnung einer Flüssigkeitsdosiervorrichtung, ein Sensor zur Erfassung elektrostatischer Ladungen, ein lonisator, ein Identifikationsgerät, ein Abstandssensor oder eine Reinigungsvorrichtung. Vorzugsweise weisen die weiteren Funktionspositionen des Multifunktionskopfs und die weiteren Vorrichtungen eine standardisierte mechanische und elektrische Schnittstelle auf. Der Multifunktionskopf kann dadurch auf einfache Weise nach Kundenwunsch mit entsprechenden Funktionsmodulen ausgerüstet werden.

Einige der Funktionspositionen können Vorrichtungen aufweisen, welche wiederholt grössere Mengen eines Dosierguts, beispielsweise eines Lösungsmittels in das Zielgefäss füllen. Zu deren Versorgung kann der Multifunktionskopf mindestens eine Anschlussstelle für eine Verbindungsleitung oder ein auswechselbares Entnahmegefäss aufweisen.

Damit kein Dosiergut verschüttet wird, sollte die Austragungsöffnung der Dosiervorrichtung während des Dosiervorgangs unmittelbar über der Einfüllöffnung des Zielgefässes angeordnet sein. Solange Zielgefässe gleicher Höhe eingesetzt werden, kann der Abstand zwischen der Gefässaufnahme und dem Multifunktionskopf fest eingestellt sein. Vorzugsweise ist aber der Multifunktionskopf zusätzlich relativ zur Gefässaufnahme in vertikaler Richtung verschiebbar am Grundgehäuse angeordnet, so dass Zielgefässe unterschiedlicher Höhe auf die Gefässaufnahme gesetzt werden können.

Ferner kann die mindestens eine mit dem Durchbruch versehene Schutzwand zusammen mit dem Multifunktionskopf vertikal verschiebbar ausgestaltet sein. Selbstverständlich können auch weitere Schutzwände ohne Durchbruch zusammen mit dem Multifunktionskopf verschiebbar sein. Durch die Verschiebbarkeit der Schutzwände kann das Volumen des Bereitstellungsraums der Gefässhöhe angepasst werden, wodurch dieses immer minimal gehalten werden kann. Dementsprechend kann die Wägezelle bei kleinen Zielgefässen rascher einen stabilen Wägewert liefern, wodurch Kleinstmengen mit hoher Präzision dosiert werden können. Gegebenenfalls kann die Auflösung der Wägezelle, das heisst deren Fähigkeit zwischen nahe beieinander liegenden Messwerten eindeutig zu unterscheiden, in Abhängigkeit des Bereitstellungsraum-Volumens gesteuert werden, um die kurze Reaktionszeit der Messwerterfassung möglichst beizubehalten.

Das Laborgerät mit der erfindungsgemässen Anordnung des Multifunktionskopfs wird im Folgenden anhand von Beispielen und mit Bezugnahme auf die schematisch dargestellten Zeichnungen näher erläutert. Darin zeigen:
- Figur 1: ein Laborgerät in einer ersten Ausführung mit einem durch Schutzwände umschlossenen Bereitstellungsraum sowie mit einem Multifunktionskopf, welcher in einem Durchbruch einer Schutzwand um eine horizontale Drehachse drehbar angeordnet ist, in dreidimensionaler Ansicht;
- Figur 2: ein Laborgerät in einer zweiten Ausführung mit einem durch Schutzwände umschlossenen Bereitstellungsraum sowie mit einem Multifunktionskopf, welcher in einem Durchbruch zweier Schutzwände um eine vertikale Drehachse drehbar angeordnet ist, in dreidimensionaler Ansicht;
- Figur 3: ein Teilausschnitt des in Figur 1 gezeigten Laborgeräts in geschnittener Aufsicht, wobei zwischen der Schutzwand und dem Multifunktionskopf eine Dichtungsvorrichtung angeordnet ist und eine weitere Dichtungsvorrichtung den ausserhalb des Bereitstellungsraums angeordneten Teil des Multifunktionskopfs überspannt;
- Figur 4: ein Teilausschnitt des in Figur 1 gezeigten Laborgeräts in geschnittener Aufsicht, wobei zwischen der Schutzwand und dem Multifunktionskopf eine Dichtungsvorrichtung und eine Reinigungsvorrichtung angeordnet ist;
- Figur 5: im Wesentlichen das Laborgerät aus Figur 1, wobei das in Figur 5 dargestellte Laborgerät einen linear verschiebbaren Multifunktionskopf aufweist, welcher sich über den Bereitstellungsraum hinaus erstreckt und die Funktionspositionen auf zwei Ebenen angeordnet sind.

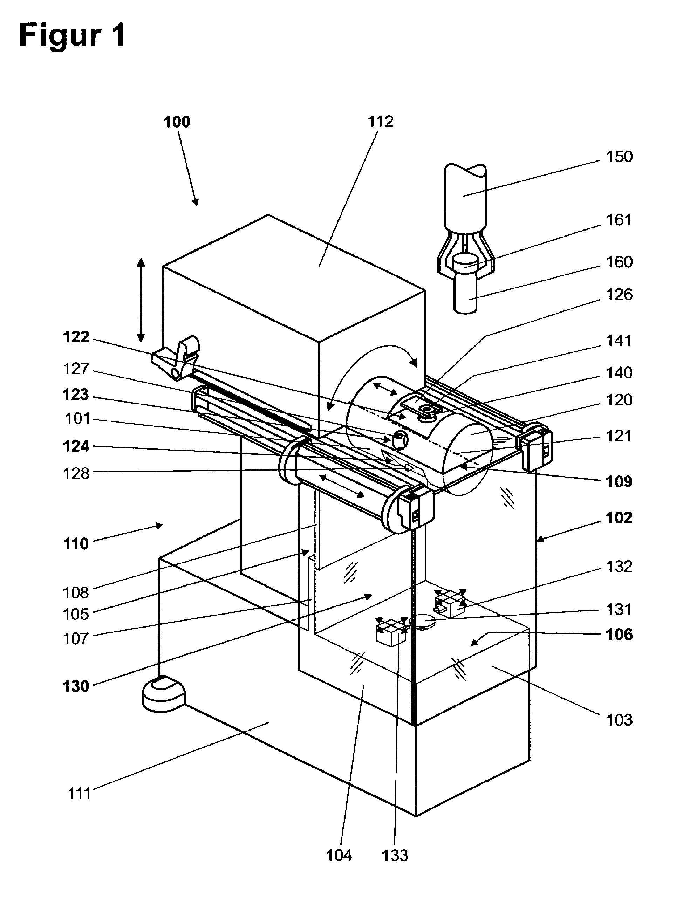

In Figur 1 ist in dreidimensionaler Ansicht ein Laborgerät 100 in einer ersten Ausführung mit einem durch Schutzwände 101, 102, 103, 104, 105, 106 umschlossenen Bereitstellungsraum 130 dargestellt. Das Laborgerät 100 weist ein Grundgehäuse 110 auf, welches in ein Oberteil 112 und in ein Unterteil 111 zweigeteilt ist. Das Oberteil 112 kann relativ zum Unterteil 111 in vertikaler Richtung linear verschoben werden. Das Unterteil 111 ist im Wesentlichen ein quaderförmiger Kasten, in welchem eine nicht dargestellte Wägezelle angeordnet ist. Am Oberteil 112 ist ein Multifunktionskopf 120 um eine horizontale Drehachse 121 drehbar gelagert. Vier der Schutzwände 102, 103, 104, 105 erstrecken sich in ihrer flächigen Ausdehnung in vertikaler Richtung, wobei zwei der vertikalen Schutzwände Seitenwände 102, 104, die dritte eine Frontwand 103 und die vierte eine Rückwand 105 des Bereitstellungsraumes 130 sind. Die beiden Seitenwände 102, 104 sind in horizontaler Richtung linear verschiebbar mit dem Oberteil 112 verbunden. Die Frontwand 103 ist mit dem Oberteil 112 demontierbar verbunden. Die Rückwand 105 ist zweiteilig ausgebildet, wobei das erste Rückwandteil 107 mit dem Unterteil 111 und das zweite Rückwandteil 108 mit dem Oberteil 112 fest verbunden sind. Ferner sind die beiden Rückwandteile 107, 108 einander teilweise überlappend angeordnet, so dass eine Verschiebung des Oberteils 112 zum Unterteil 111 ermöglicht wird und der Bereitstellungsraum 130 in jeder Verschiebelage von der Umgebung abgetrennt ist.

Die fünfte Schutzwand 101 erstreckt sich in ihrer flächigen Ausdehnung in horizontaler Richtung, ist ebenfalls mit dem Oberteil 112 fest verbunden und bildet die Abdeckung 101 des Bereitstellungsraums 130. In der Abdeckung 101 ist der Durchbruch 109 ausgebildet, welcher durch die erfindungsgemässe Anordnung des Multifunktionskopfs 120 verschlossen ist. Eine sechste Schutzwand 106 des Bereitstellungsraums 130 bildet der Boden 106, dessen flächige Ausdehnung sich ebenfalls in horizontaler Richtung erstreckt und welcher mit dem Unterteil 111 fest verbunden ist. Durch die transparenten Frontwand 103 und Seitenwände 102, 104 kann der Bereitstellungsraum 130 eingesehen werden. Die im Bereitstellungsraum 130 angeordnete Gefässaufnahme 131 ist mit der im Unterteil 111 angeordneten Wägezelle lastübertragend verbunden. Die Frontwand 103 und die beiden Seitenwände 102, 104 sind an den Kastenwänden des Unterteils 111 vorbeiführbar angeordnet, so dass zu diesem das Oberteil 112 ungehindert vertikal verschiebbar ist. Dabei liegen diese Schutzwände 102, 103, 104 an den Kastenwänden des Unterteils 111 satt an, so dass keine in der Umgebung vorhandenen Luftbewegungen über zu grosse Lecks in den Bereitstellungsraum 130 übertragen werden.

Der Multifunktionskopf 120 weist mehrere Funktionspositionen 122, 123, 124 auf, die mit voneinander unterschiedlichen Vorrichtungen bestückt sind, wobei nur drei dieser Funktionspositionen 122, 123, 124 sichtbar sind. In der ersten Funktionsposition 122 ist eine Aufnahmevorrichtung 126 ausgebildet in welche eine Dosiervorrichtung 140 eingesetzt ist. Diese Dosiervorrichtung 140 weist eine Auslassöffnung 141 auf, welche durch ein nicht dargestelltes Ventil verschliessbar ist. Das Ventil ist durch eine ebenfalls nicht dargestellte Antriebsvorrichtung öffnen- beziehungsweise verschliessbar.

Wie in Figur 1 dargestellt, befindet sich die Dosiervorrichtung 140 ausserhalb des Bereitstellungsraums 130, wobei deren Auslassöffnung 141 in Richtung entgegen der Schwerkraft zeigt. Sobald Dosiergut ausgetragen werden soll, wird der Multifunktionskopf 120 gedreht, bis die Dosiervorrichtung 140 innerhalb des Bereitstellungsraumes 130 ist, die Auslassöffnung 141 in Richtung der Schwerkraft zeigt und unter Einfluss derselben Dosiergut ausgetragen werden kann. Durch das Drehen des Multifunktionskopfs 120 kann ferner in der Dosiervorrichtung 140 enthaltenes pulverförmiges, koagulierendes Dosiergut aufgelockert werden, gegebenenfalls durch mehrmaliges Drehen, durch oszillierende Drehbewegungen und dergleichen mehr.

Wie aus der Darstellung ersichtlich ist, kann die Dosiervorrichtung 140 manuell, aber auch mittels eines Robotergreifers 150 in die Aufnahmevorrichtung 126 des Multifunktionskopfs 120 eingesetzt werden. Dabei befinden sich der Roboter und dessen Robotergreifer 150 ausserhalb des Bereitstellungsraumes 130. Damit auch Zielgefässe 160 mittels des Robotergreifers 150 auf die Gefässaufnahme 131 aufgesetzt werden können, kann der Multifunktionskopf 120 entlang seiner Drehachse 121 linear verschoben werden, so dass bei in das Oberteil 112 eingezogenem Multifunktionskopf 120 der Durchbruch 109 freigegeben ist. Bei der Bestückung durch den Roboter bleibt dieser immer ausserhalb des Bereitstellungsraums, weshalb nur der Robotergreifer 150 gelegentlich gereinigt werden muss. Ferner kann das Volumen des Bereitstellungsraums 130 durch die erfindungsgemässe Anordnung des Multifunktionskopfs 120 minimal gehalten werden, so dass die eingeschlossene Luftmasse im Bereitstellungsraum 130 rasch zur Ruhe kommt und eine präzise, rasche Erfassung der Wägewerte ermöglicht wird.

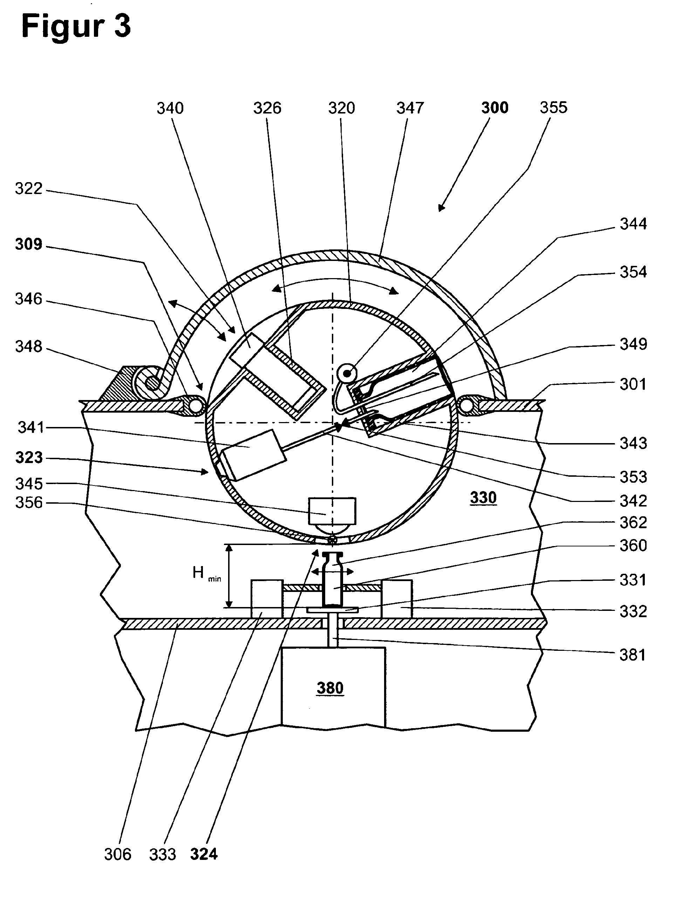

Nebst der Aufnahmevorrichtung 126 der ersten Funktionsposition 122, weisen die zweite Funktionsposition 123 eine Deckelöffnungsvorrichtung 127 und die dritte Funktionsposition 124 die Auslassdüse einer nicht detailliert dargestellten Flüssigkeitsdosiervorrichtung 128 auf. Damit die Deckelöffnungsvorrichtung 127 einen Verschluss, beziehungsweise einen Schraubdeckel 161 eines Zielgefässes 160 öffnen kann, sind im Bereitstellungsraum 130 seitlich der Gefässaufnahme 131 zwei Klemmvorrichtungen 132, 133 vorhanden, mittels welcher das Zielgefäss 160 zur Abstützung des Drehmoments temporär festgeklemmt werden kann. Die beiden Klemmvorrichtungen 132, 133 können wie mittels der Pfeile angedeutet, in horizontaler Ebene simultan verschiebbar sein. Dadurch kann das Zielgefäss 160 nicht nur festgeklemmt, sondern mit Hilfe der Klemmvorrichtungen 132, 133 auch präzise positioniert werden. Als optisches Hilfsmittel kann beim Positionierungsvorgang die in Figur 3 beschriebene Kamera dienen, deren Bild auf eine nicht dargestellte Anzeige des Laborgeräts 100 übertragen wird und dem Benutzer anzeigt, wie er manuell oder mittels der Eingabetastatur halbautomatisch, die Klemmvorrichtungen verschieben muss. Selbstverständlich kann das Bild der Kamera auch in einer Laborgerät-internen Recheneinheit verarbeitet und mittels dieser Daten der Positionierungsvorgang automatisch durchgeführt werden. Selbstverständlich werden während des Wägevorganges die Klemmvorrichtungen 132, 133 vollständig vom Zielgefäss 160 getrennt, so dass das Wägeresultat nicht durch die Klemmvorrichtungen 132, 133 beeinflusst wird.

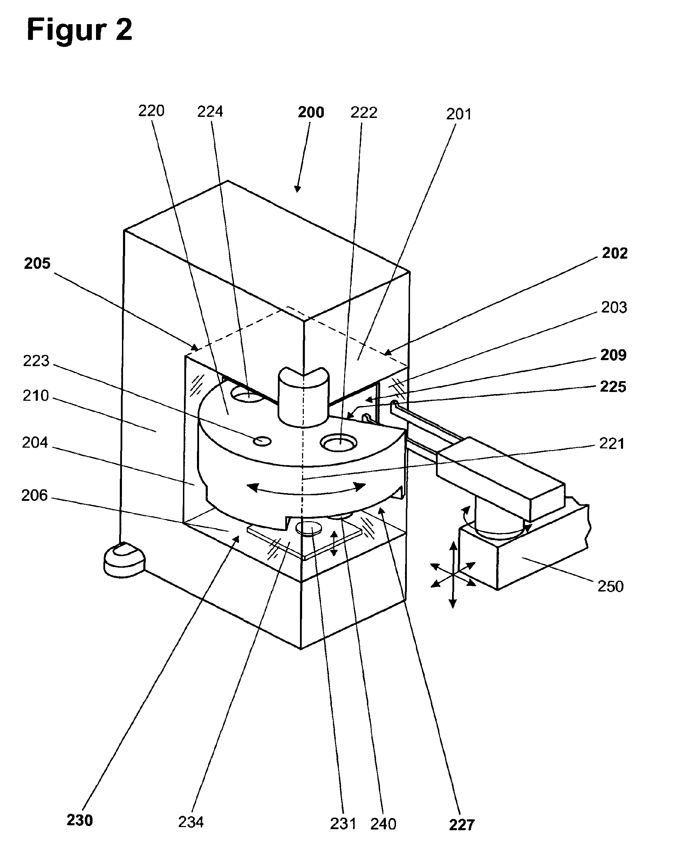

Figur 2 zeigt in dreidimensionaler Ansicht ein Laborgerät 200 in einer zweiten Ausführung mit einem durch Schutzwände 201, 202, 203, 204, 205, 206 umschlossenen Bereitstellungsraum 230. Das Laborgerät umfasst ein C- förmiges Grundgehäuse 210, wobei drei Wände des Grundgehäuses 210 auch Schutzwände des Bereitstellungsraumes 230 sind, nämlich dessen Boden 206, dessen Rückwand 205 und dessen Abdeckung 201. Die weiteren Schutzwände, nämlich die Frontwand 203 und die beiden Seitenwände 202, 204 sind aus transparentem Material gefertigt, so dass die Vorgänge im Bereitstellungsraum 230 beobachtet werden können. Der Durchbruch 209 erstreckt sich bei diesem Laborgerät 200 über die eine Seitenwand 204 und die Frontwand 203. Im Durchbruch 209 ist ein Multifunktionskopf 220 angeordnet, dessen Drehachse 221 in vertikaler Richtung angeordnet ist. Auch dieser Multifunktionskopf 220 weist mehrere Funktionspositionen 222, 223, 224 auf, wobei eine weitere Funktionsposition eine Freistellung 225 zur teilweisen Freigabe des Durchbruchs 209 ist, mittels welcher für einen Robotergreifer 250 ein freier Durchgang zum Bereitstellungsraum 230 geschaffen werden kann. Selbstverständlich müssen die Schutzwände 201, 202, 203, 204, 205, 206 nicht starr mit dem Grundgehäuse 210 verbunden sein sondern können auch, wie beim ersten Ausführungsbeispiel in Figur 1 gezeigt, linear verschiebbar an diesem angeordnet sein. Der Multifunktionskopf 220 weist ferner Ausnehmungen 227 an dessen Unterseite auf, so dass beispielsweise eine Dosiervorrichtung 240 von unten in die Aufnahmevorrichtung der ersten Funktionsposition 222 eingesetzt und wieder entfernt werden kann.

Im Grundgehäuse 210 ist eine Wägezelle angeordnet, deren Wägezellengehäuse 234 teilweise aus dem Boden 206 herausragt und welche relativ zum Boden 206 in vertikaler Richtung linear verschiebbar ist. Durch diese Anordnung kann der Abstand zwischen dem Multifunktionskopf 220 und der mit der Wägezelle verbundenen Gefässaufnahme 231 einem Zielgefäss angepasst werden.

In Figur 3 ist ein Teilausschnitt eines Laborgeräts 300 in geschnittener Aufsicht dargestellt, welches weitgehend dem in Figur 1 gezeigten Laborgerät 100 entspricht, jedoch sind die Funktionspositionen 322, 323, 324 des Multifunktionskopfs 320 teilweise anders bestückt. In der ersten Funktionsposition 322 ist eine Aufnahmevorrichtung 326 angeordnet, in welcher eine Dosiervorrichtung 340 eingesetzt ist. In der zweiten Funktionsposition 323 ist ein Flüssigdosierkopf 341 angeordnet, welcher über eine Verbindungsleitung 342 mit einer Flüssigkeit versorgt wird. Die Verbindungsleitung 342 weist ferner ein Ventil 353 auf, durch welches die austretende Flüssigkeitsmenge gesteuert werden kann. Das Ende der Verbindungsleitung 342 weist eine scharfe Schneidkante auf und ragt in eine Anschlussstelle 343 für ein Entnahmegefäss 344 hinein. Die Anschlussstelle 343 muss wie dargestellt das ganze Entnahmegefäss 344 aufnehmen können, da sonst der Multifunktionskopf 320 nur begrenzt gedreht werden kann. Ferner ist eine Druckleitung 354 mit einer Druckgasquelle 355 verbunden, wobei die Druckleitung 354 ebenfalls in die Anschlussstelle 343 hineinragt und eine Schneidkante aufweist. Das Entnahmegefäss 344 weist ein Septum 349 auf, welches wie dargestellt, mittels der Schneidkanten durchstochen werden kann um den Inhalt des Entnahmegefässes 344 anzuzapfen. Es versteht sich von selbst, dass die gezeigte Anordnung und Lage nur eine von vielen Ausführungsvarianten ist, wie das Entnahmegefäss 344 mit dem Flüssigdosierkopf 341 verbunden werden kann. Eine der Alternativen besteht beispielsweise darin, dass die Verbindungsleitung 342 durch das Grundgehäuse hindurch aus dem Laborgerät 300 hinausgeführt und mit einer externen Versorgungsstation verbunden ist.

In der dritten Funktionsposition 324 ist eine Kamera 345 angeordnet, mittels welcher ein Zielgefäss 360 auf der Gefässaufnahme 331 ausgerichtet werden kann, so dass bei den nachfolgenden Dosiervorgängen der ausfliessende Dosiergutstrom auch die Einfüllöffnung 362 des Zielgefässes 360 sicher trifft. Ferner kann das Zielgefäss 360 mit der Kamera 345 identifiziert werden, sofern dieses eine lesbare Kennzeichnung trägt. Des Weiteren ist mittels der Kamera 345 die Höhe des Zielgefässes 360 erfassbar damit der minimale Abstand Hₘᵢₙ zwischen dem Multifunktionskopf 320 und der Einlassöffnung 362 eingerichtet werden kann. Hilfsweise kann unterhalb der Kamera 345 eine Laserdiode 356 angeordnet sein, deren Lichtstrahl parallel zur Drehachse ausgerichtet ist. Mittels des Lichtstrahls ist die Oberkante des Zielgefässes 360 genau abtastbar, da der Lichtstrahl die Einfüllöffnung 362 beleuchtet, sobald der gewünschte Abstand Hₘᵢₙ erreicht ist und dies mit der Kamera 345 erfasst werden kann. Zudem kann nach dem Dosiervorgang mit der Kamera 345 überprüft werden, ob das Zielgefäss 360 korrekt befüllt wurde oder ob beispielsweise Spuren des Dosierguts am Rande der Einfüllöffnung 362 anhaften.

Der den Multifunktionskopf 320 umlaufende Rand des in der Abdeckung 301 ausgebildeten Durchbruchs 309 ist mit einer Dichtungsvorrichtung in der Form einer flexiblen Dichtungsleiste 346 versehen, deren Dichtfläche mit leichtem Druck gegen die zylindrische Wand des Multifunktionskopfs 320 gepresst ist. Der dargestellte Querschnitt der Dichtungsleiste 346 ist nur eine von vielen möglichen Varianten und beispielhaft zu verstehen. Wenn an der Zylinderwand anhaftende Partikel während des Drehens abgestreift werden sollen, bieten sich für die Dichtungsleiste 346 andere Profilquerschnitte mit scharfen Kanten an, wie sie beispielsweise Scheibenwischerblätter aufweisen. Ferner ist eine weitere Dichtungsvorrichtung in Form einer Haube 347 vorhanden, die den ausserhalb des Bereitstellungsraums 330 angeordneten Teil des Multifunktionskopfs 320 überspannt und während bestimmter Betriebsphasen des Laborgeräts den Multifunktionskopf 320 vor ungewollten Zugriffen schützt. Die Haube 347 ist an einer Seite mittels eines mit der Abdeckung 301 verbundenen Scharniers 348 schwenkbar gelagert, so dass sie weggeklappt werden kann, um die Dosiervorrichtung 340 aus der Aufnahmevorrichtung 326 zu entfernen beziehungsweise einzusetzen.

Unterhalb des Bodens 306 ist ferner die Wägezelle 380 erkennbar, welche mit der Gefässaufnahme 331 mittels eines Übertragungsgestänges 381 lastübertragend verbunden ist.

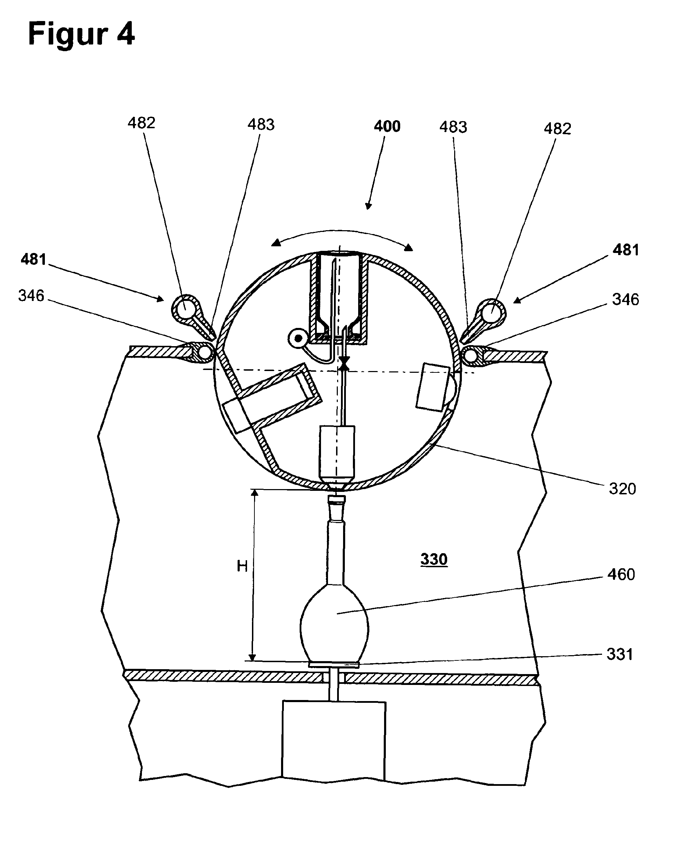

Figur 4 zeigt im Wesentlichen denselben Teilausschnitt des in Figur 3 dargestellten Laborgeräts in geschnittener Aufsicht, weshalb alle identischen Elemente dieselben Bezugszeichen aufweisen. Der Unterschied besteht darin, dass anstelle der in Figur 3 dargestellten Haube, beim Laborgerät 400 der Figur 4 eine Reinigungsvorrichtung 481 angeordnet ist. Die Reinigungsvorrichtung 481 weist einen der Dichtungsleiste 346 folgenden, umlaufenden Saugkanal 482 auf, welcher einen zur Dichtungsleiste 346 hin gerichteten Saugschlitz 483 aufweist. Die Mündung des Saugschlitzes 483 ist in unmittelbarer Nähe der Berührungslinie zwischen dem Multifunktionskopf 320 und der Dichtungsleiste 346 angeordnet. Der Saugkanal 482 ist mit einer nicht dargestellten Absaugvorrichtung verbunden, welche die Luft im Bereich der Dichtungsleiste 346 zumindest während des Drehens des Multifunktionskopfs 320 kontinuierlich absaugt. Wenn Dosiergutrückstände an der Zylindermantelfläche des Multifunktionskopfs 320, beispielsweise in Vertiefungen, nicht von der Dichtungsleiste 346 abgestreift werden, werden sie durch die Reinigungsvorrichtung 481 vom Multifunktionskopf 320 abgesaugt. Dasselbe gilt natürlich auch für von aussen auf den Multifunktionskopf 320 gelangende Verunreinigungen wie Staubpartikel, welche von der in den Bereitstellungsraum 330 eindrehenden Oberfläche des Multifunktionskopfs 320 abgesaugt werden.

Auf der Gefässaufnahme 331 befindet sich ein Zielgefäss 460 mit einem langgestreckten Gefässkörper, weshalb der Abstand H zwischen dem Multifunktionskopf 320 und der Gefässaufnahme 331 dementsprechend grösser gewählt ist als in Figur 3.

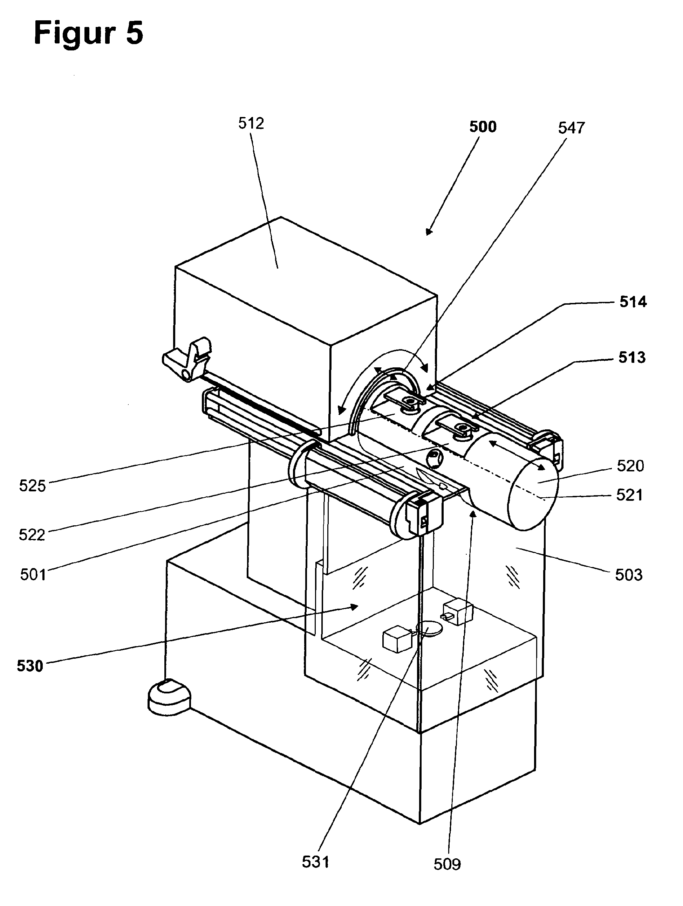

Figur 5 zeigt im Wesentlichen das erfindungsgemässe Laborgerät aus Figur 1, wobei das in Figur 5 dargestellte Laborgerät 500 einen linear verschiebbaren Multifunktionskopf 520 aufweist, welcher sich über den Bereitstellungsraum 530 hinaus erstreckt. Dem entsprechend erstreckt sich der Durchbruch 509 sowohl über die gesamte Abdeckung 501 wie auch über einen Teil der Frontwand 503. Wie bereits in Figur 1 beschrieben, kann der Multifunktionskopf 520 entlang seiner Drehachse 521 beliebig verschoben werden. Dies ermöglicht es, dass Funktionspositionen 522, 525 auf verschiedenen, orthogonal zur Drehachse 521 sich erstreckender Ebenen 513, 514 angeordnet werden können. In der dargestellten Ausführung ist eine erste Ebene 513 vorhanden, auf welcher die erste Funktionsposition 522 und die weiteren, bereits in Zusammenhang mit Figur 1 beschriebenen Funktionspositionen angeordnet sind. In der zweiten Ebene 514, welche zwischen der ersten Ebene 513 und dem Oberteil 512 angeordnet ist, ist am Multifunktionskopf 520 eine vierte Funktionsposition 525 ausgebildet. Sowohl die erste Ebene 513 wie auch die zweite Ebene 514 können durch lineares Verschieben des Multifunktionskopfs 520 in Übereinstimmung mit der Gefässaufnahme 531 gebracht werden.

Das Laborgerät 500 verfügt ferner über eine Haube 547, welche nicht wie in der Figur 3 schwenkbar ist, sondern parallel zum Multifunktionskopf 520 in derselben Richtung linear verschiebbar ist. Die Haube 547 in Figur 5 ist nahezu vollständig in das Oberteil 512 hineingeschoben dargestellt, so dass der Multifunktionskopf 520 besser erkennbar ist. Im Betrieb des Laborgeräts 500 wird durch die Haube 547 selbstverständlich nur soviel vom Multifunktionskopf 520 freigegeben, wie es der auszuführende Prozessschritt gerade erfordert.

Obwohl die Erfindung durch die Darstellung spezifischer Ausführungsbeispiele beschrieben worden ist, ist es offensichtlich, dass zahlreiche weitere Ausführungsvarianten in Kenntnis der vorliegenden Erfindung geschaffen werden können, beispielsweise dass die Reinigungsvorrichtung auch im Bereitschaftsraum angeordnet sein kann oder dass die Reinigungsvorrichtung in Kombination mit der Haube eingesetzt werden kann. Ferner können mehrere Gefässaufnahmen im Bereitstellungsraum angeordnet werden, welche alle zusammen mit einer Wägezelle oder jede einzeln mit einer zugeteilten Wägezelle lastübertragend verbunden sind. Auch sind Ausführungen des Laborgeräts denkbar, bei welchem mehrere Multifunktionsköpfe vorhanden sind, die in denselben Bereitschaftsraum hineinreichen. Selbstverständlich sind zusätzliche Einrichtungen an der Dosiervorrichtung, am Multifunktionskopf beziehungsweise an jeder mit dem Multifunktionskopf verbindbaren Vorrichtung möglich, beispielsweise Identifikationsmittel wie Barcodes, Matrixcodes und/oder Radio-Frequency-Identification Mittel (RFID- Tags). Auch Gasanschlüsse zur Einbringung von Schutzgasen in den Bereitstellungsraum können vorhanden sein, ebenso wie Schalen mit Lösungsmitteln, die durch Sättigen der im Bereitstellungsraum vorhandenen Luft eine Verdunstung des in das Zielgefäss eindosierten Lösungsmittels unterbinden.

### Bezugszeichenliste

- 500, 400, 300, 200, 100: Laborgerät
- 501, 301, 201, 101: Schutzwand Abdeckung
- 202, 102: Schutzwand Seitenwand
- 503, 203, 103: Schutzwand Frontwand
- 204, 104: Schutzwand Seitenwand
- 205, 105: Schutzwand Rückwand
- 306, 206, 106: Schutzwand Boden
- 107: erstes Rückwandteil
- 108: zweites Rückwandteil
- 509, 309, 209, 109: Durchbruch
- 210, 110: Grundgehäuse
- 111: Unterteil
- 512, 112: Oberteil
- 520, 320, 220, 120: Multifunktionskopf
- 521, 121: horizontale Drehachse
- 522, 322, 222, 122: erste Funktionsposition
- 323, 223, 123: zweite Funktionsposition
- 324, 224, 124: dritte Funktionsposition
- 326, 126: Aufnahmevorrichtung
- 127: Deckelöffnungsvorrichtung
- 128: Flüssigkeitsdosiervorrichtung
- 530, 330, 230, 130: Bereitstellungsraum
- 531, 331, 231, 131: Gefässaufnahme
- 133, 132: Klemmvorrichtung
- 340, 240, 140: Dosiervorrichtung
- 141: Auslassöffnung
- 250, 150: Robotergreifer
- 460, 360, 160: Zielgefäss
- 161: Schraubdeckel
- 211: vertikale Drehachse
- 225: Funktionsposition Freistellung
- 227: Ausnehmung
- 234: Wägezellengehäuse
- 341: Flüssigdosierkopf
- 342: Verbindungsleitung
- 343: Anschlussstelle
- 344: Entnahmegefäss
- 345: Kamera
- 346: Dichtungsleiste
- 547,347: Haube
- 348: Scharnier
- 349: Septum
- 353: Ventil
- 354: Druckleitung
- 355: Druckgasquelle
- 356: Laserdiode
- 362: Einfüllöffnung
- 380: Wägezelle
- 381: Übertragungsgestänge
- 481: Reinigungsvorrichtung
- 482: Saugkanal
- 483: Saugschlitz
- 513: erste Ebene
- 514: zweite Ebene
- 525: vierte Funktionsposition

## Patentansprüche

1. Laborgerät (100, 200, 300, 400, 500) zur Bereitstellung von Proben, umfassend ein Grundgehäuse (110, 210) mit einem durch Schutzwände (101, 102, 103, 104, 105, 106) umschlossenen Bereitstellungsraum (130, 230, 330, 530) sowie mit mindestens einem am Grundgehäuse (110, 210) um eine Drehachse (121, 221, 521) drehbar gelagert angeordneten Multifunktionskopf (120, 220, 320, 520) welcher mindestens zwei definierte Funktionspositionen (122, 123, 124) aufweist und jede dieser Funktionspositionen (122, 123, 124) mittels einer Drehung des Multifunktionskopfs (120, 220, 320, 520) zu mindestens einer im Bereitstellungsraum (130, 230, 330, 530) angeordneten Gefässaufnahme (131, 231, 331, 531) ausrichtbar ist, wobei die erste Funktionsposition (122, 123, 124) eine Aufnahmevorrichtung (126, 326) zur Aufnahme einer Dosiervorrichtung (140, 240, 340) mit fliessfähigem Dosiergut beinhaltet und jede weitere Funktionsposition (122, 123, 124) je eine weitere Vorrichtung aufweist, wobei mindestens eine Schutzwand (101, 102, 103, 104, 105, 106) einen Durchbruch (109, 209, 309, 509) aufweist und der mindestens eine Multifunktionskopf (120, 220, 320, 520) partiell im Durchbruch (109, 209, 309, 509) angeordnet ist, so dass ein Teil des Multifunktionskopfs (120, 220, 320, 520) ausserhalb des Bereitstellungsraums (130, 230, 330, 530) und der andere Teil des Multifunktionskopfs (120, 220, 320, 520) innerhalb des Bereitstellungsraums (130, 230, 330, 530) angeordnet ist, **dadurch gekennzeichnet, dass** die weiteren Vorrichtungen weitere Aufnahmevorrichtungen zur Aufnahme von Dosiervorrichtungen (140, 240, 340, 341) oder Vorrichtungen (127, 128, 209, 341, 345) mit anderen Funktionen aufweisen und immer ein Teil des Multifunktionskopfs (120, 220, 320, 520) ausserhalb des Bereitstellungsraumes ist (130, 230, 330, 530) und damit die in dem ausserhalb des Bereitstellungsraumes (130, 230, 330, 530) angeordneten Funktionspositionen (122, 123, 124) zugänglich sind.

2. Laborgerät (100, 200, 300, 400, 500) nach Anspruch 1, **dadurch gekennzeichnet, dass** im Grundgehäuse (110, 210) eine Wägezelle (234) angeordnet ist und mindestens eine Gefässaufnahme (131, 231, 331, 531) mit der Wägezelle (234) kraftübertragend verbunden ist.

3. Laborgerät (100, 200, 300, 400, 500) nach Anspruch 1 oder 2, **dadurch gekennzeichnet, dass** die Drehachse (121, 221, 521) des mindestens einen Multifunktionskopfs (120, 220, 320, 520) horizontal oder vertikal angeordnet ist.

4. Laborgerät (100, 200, 300, 400, 500) nach einem der Ansprüche 1 bis 3, **dadurch gekennzeichnet, dass** sich der mindestens eine Durchbruch (109, 209, 309, 509) in mindestens zwei anliegende Schutzwände (101, 102, 103, 104, 105, 106) erstreckt.

5. Laborgerät (100, 200, 300, 400, 500) nach einem der Ansprüche 1 bis 4, **dadurch gekennzeichnet, dass** der mindestens eine Multifunktionskopf (120, 220, 320, 520) zur zumindest teilweisen Freigabe der Öffnung des Durchbruchs (109, 209, 309, 509) linear verschiebbar und/oder verschwenkbar ist.

6. Laborgerät (100, 200, 300, 400, 500) nach einem der Ansprüche 1 bis 4, **dadurch gekennzeichnet, dass** der mindestens eine Multifunktionskopf (120, 220, 320, 520) zur teilweisen Freigabe der Öffnung des Durchbruchs (109, 209, 309, 509) eine weitere Funktionsposition mit einer Freistellung (225) aufweist.

7. Laborgerät (100, 200, 300, 400, 500) nach einem der Ansprüche 1 bis 6, **dadurch gekennzeichnet, dass** der mindestens eine Multifunktionskopf (120, 220, 320, 520) entlang seiner Drehachse (121, 221, 521) linear verschiebbar ist und eine erste Ebene (513) und mindestens eine zweite Ebene (514) aufweist die orthogonal zur Drehachse (121, 221, 521) angeordnet sind, wobei mindestens eine erste Funktionsposition (522) in der ersten Ebene (513) und eine weitere Funktionsposition (525) in der mindestens zweiten Ebene (514) am Multifunktionskopf (120, 220, 320, 520) ausgebildet sind.

8. Laborgerät (100, 200, 300, 400, 500) nach einem der Ansprüche 1 bis 7, **dadurch gekennzeichnet, dass** im Bereich des Durchbruchs (109, 209, 309, 509) eine Dichtungsvorrichtung (346, 347, 547) angeordnet ist.

9. Laborgerät (100, 200, 300, 400, 500) nach Anspruch 8, **dadurch gekennzeichnet, dass** die Dichtungsvorrichtung (346, 347, 547) eine zwischen der Schutzwand (101, 102, 103, 104, 105, 106) und dem mindestens einen Multifunktionskopf (120, 220, 320, 520) angeordnete elastische Dichtungsleiste (346), Dichtungsbürste oder Dichtungsrolle ist.

10. Laborgerät (100, 200, 300, 400, 500) nach Anspruch 8 oder 9, **dadurch gekennzeichnet, dass** die Dichtungsvorrichtung (346, 347, 547) eine Haube (347, 547) oder ein Deckel ist die den Durchbruch (109, 209, 309, 509) vollständig abdeckt und denjenigen Teil des mindestens einen Multifunktionskopfs (120, 220, 320, 520), welcher ausserhalb des Bereitstellungsraums (130, 230, 330, 530) angeordnet ist, überspannt.

11. Laborgerät (100, 200, 300, 400, 500) nach einem der Ansprüche 8 bis 10, **dadurch gekennzeichnet, dass** im Bereich der Dichtungsvorrichtung (346, 347, 547) eine Reinigungsvorrichtung (481) zur Reinigung des Multifunktionskopfs (120, 220, 320, 520) und/oder der Dichtungsvorrichtung (346, 347, 547) angeordnet ist.

12. Laborgerät (100, 200, 300, 400, 500) nach einem der Ansprüche 1 bis 11, **dadurch gekennzeichnet, dass** der mindestens eine Multifunktionskopf (120, 220, 320, 520) eine zylindrische Grundform aufweist.

13. Laborgerät (100, 200, 300, 400, 500) nach einem der Ansprüche 1 bis 12, **dadurch gekennzeichnet, dass** die weitere Vorrichtung eine weitere Aufnahmevorrichtung (126, 326) für eine Dosiervorrichtung (140, 240, 340), eine elektrooptische Einheit (345, 356) zur Identifizierung und/oder Positionierung eines Zielgefässes (160, 360,460) auf der Gefässaufnahme (131, 231, 331, 531), eine Vorrichtung zum Entfernen beziehungsweise Aufsetzen des Verschlusses (161) eines Zielgefässes (160, 360, 460), ein Greifer zum Ergreifen von Objekten, eine Flüssigkeitsdosiervorrichtung (341), eine Aufnahmevorrichtung (126, 326) für eine Flüssigkeitsdosiervorrichtung (341) oder zumindest die Auslassöffnung einer Flüssigkeitsdosiervorrichtung (341), ein Sensor zur Erfassung elektrostatischer Ladungen, ein Ionisator, ein Identifikationsgerät, ein Abstandssensor (345, 356) oder eine Reinigungsvorrichtung (481) ist.

14. Laborgerät (100, 200, 300, 400, 500) nach einem der Ansprüche 1 bis 13, **dadurch gekennzeichnet, dass** der mindestens eine Multifunktionskopf (120, 220, 320, 520) mindestens eine Anschlussstelle (343) für ein Entnahmegefäss (344) oder eine Verbindungsleitung (342) aufweist.

15. Laborgerät (100, 200, 300, 400, 500) nach einem der Ansprüche 1 bis 14, **dadurch gekennzeichnet, dass** der mindestens eine Multifunktionskopf (120, 220, 320, 520) zusätzlich relativ zur Gefässaufnahme (131, 231, 331, 531) in vertikaler Richtung verschiebbar am Grundgehäuse (110, 210) angeordnet ist.

16. Laborgerät (100, 200, 300, 400, 500) nach Anspruch 15, **dadurch gekennzeichnet, dass** die mindestens eine mit dem Durchbruch (109, 209, 309, 509) versehene Schutzwand (101, 102, 103, 104, 105) zusammen mit dem mindestens einen Multifunktionskopf (120, 220, 320, 520) vertikal verschiebbar ist.

17. Laborgerät (100, 200, 300, 400, 500) nach einem der Ansprüche 1 bis 16, **dadurch gekennzeichnet, dass** die Gefässaufnahme (131, 231, 331, 531) relativ zum mindestens einen Multifunktionskopf (120, 220, 320, 520) in vertikaler Richtung verschiebbar angeordnet ist.

## Claims

1. Laboratory instrument (100, 200, 300, 400, 500) for the preparation of samples, comprising a base housing (110, 210) with a work compartment (130, 230, 330, 530) enclosed by protective walls (101, 102, 103, 104, 105, 106) as well as at least one multifunctional work head (120, 220, 320, 520) that is pivotally supported on the base housing (110, 210) with the ability to turn about a rotary axis (121, 221, 521), said work head having at least two defined functional positions (122, 123, 124), wherein by way of turning the multifunctional work head (120, 220, 320, 520), each of these functional positions (122, 123, 124) can be aligned with at least one container platform (131, 231, 331, 531) which is arranged in the work compartment (130, 230, 330, 530), and wherein the first functional position (122, 123, 124) contains a receiving device (126, 326) which serves to hold a dosage-dispensing device (140, 240, 340) with free-flowing dosage material, and each of the other functional positions (122, 123, 124) contains a further device, **characterized in that** at least one of the protective walls (101, 102, 103, 104, 105, 106) has a cutout (109, 209, 309, 509) and the at least one multifunctional work head (120, 220, 320, 520) is arranged partially in the cutout (109, 209, 309, 509), so that a part of the multifunctional work head (120, 220, 320, 520) lies outside the work compartment (130, 230, 330, 530) and the other part of the multifunctional work head (120, 220, 320, 520) lies inside the work compartment (130, 230, 330, 530) and a part of the multifunctional work head (120, 220, 320, 520) is always located outside of the work compartment (130, 230, 330, 530), so that the functional position that lies in this part is accessible.

2. Laboratory instrument (100, 200, 300, 400, 500) according to claim 1, **characterized in that** a weighing cell (234) is arranged in the base housing (110, 210) and that at least one container platform (131, 231, 331, 531) is tied to said weighing cell (234) through a force-transmitting connection.

3. Laboratory instrument (100, 200, 300, 400, 500) according to claim 1 or 2, **characterized in that** the rotary axis (121, 221, 521) of the at least one multifunctional work head (120, 220, 320, 520) is oriented horizontally or vertically.

4. Laboratory instrument (100, 200, 300, 400, 500) according to one of the claims 1 to 3, **characterized in that** the at least one cutout (109, 209, 309, 509) extends into at least two adjacent protective walls (101, 102, 103, 104, 105, 106).

5. Laboratory instrument (100, 200, 300, 400, 500) according to one of the claims 1 to 4, **characterized in that** the at least one multifunctional work head (120, 220, 320, 520) is capable of linear sliding movement and/or pivoting movement so as to set free at least part of the opening of the cutout (109, 209, 309, 509).

6. Laboratory instrument (100, 200, 300, 400, 500) according to one of the claims 1 to 4, **characterized in that** the at least one multifunctional work head (120, 220, 320, 520) comprises a further functional position with an access clearance (225) serving to set free at least part of the opening of the cutout (109, 209, 309, 509).

7. Laboratory instrument (100, 200, 300, 400, 500) according to one of the claims 1 to 6, **characterized in that** the at least one multifunctional work head (120, 220, 320, 520) is capable of linear sliding movement along its rotary axis (121, 221, 521) and comprises a first plane (524) and at least a second plane (514) which are oriented orthogonal to the rotary axis (121, 221, 521), wherein at least a first functional position (522) is formed in the first plane (513) and a further functional position (525) is formed in the at least second plane (514) on the multifunctional work head (120, 220, 320, 520).

8. Laboratory instrument (100, 200, 300, 400, 500) according to one of the claims 1 to 7, **characterized in that** a sealing device (346, 347, 547) is arranged in the area of the cutout (109, 209, 309, 509).

9. Laboratory instrument (100, 200, 300, 400, 500) according to claim 8, **characterized in that** the sealing device (346, 347, 547) is an elastic sealing strip (346), sealing brush or sealing roller arranged between the protective wall (101, 102, 103, 104, 105, 106) and the at least one multifunctional work head (120, 220, 320, 520).

10. Laboratory instrument (100, 200, 300, 400, 500) according to claim 8 or 9, **characterized in that** the sealing device (346, 347, 547) is a bonnet (347, 547) or a lid which completely covers the cutout (109, 209, 309, 509) and spans over the part of the at least one multifunctional work head (120, 220, 320, 520) which lies outside of the work compartment (130, 230, 330, 530).

11. Laboratory instrument (100, 200, 300, 400, 500) according to one of the claims 8 to 10, **characterized in that** in the area of the sealing device (346, 347, 547) there is a cleaning device (481) arranged which serves to clean the multifunctional work head (120, 220, 320, 520) and/or the sealing device (346, 347, 547).

12. Laboratory instrument (100, 200, 300, 400, 500) according to one of the claims 1 to 11, **characterized in that** the at least one multifunctional work head (120, 220, 320, 520) has the basic shape of a cylinder.

13. Laboratory instrument (100, 200, 300, 400, 500) according to one of the claims 1 to 12, **characterized in that** the further device is a further receiving device (126, 326) for a dosage-dispensing device (140, 240, 340), an electro-optical unit (345, 356) to identify and/or to position a target container (160, 360, 460) on the container platform (131, 231, 331, 531), a device to remove, or to put on, the closure seal (161) of a target container (160, 360, 460), a gripper serving to grip objects, a dosage-dispensing device for liquids (341), a receiving device (126, 326) for a dosage-dispensing device (341) for liquids, or at least the outlet opening of a dosage-dispensing device (341) for liquids, a sensor serving to detect electrostatic charges, an ionizer, an identification device, a distance sensor (345, 356), or a cleaning device (481)

14. Laboratory instrument (100, 200, 300, 400, 500) according to one of the claims 1 to 13, **characterized in that** the at least one multifunctional work head (120, 220, 320, 520) comprises at least one connector area (343) for a source container (344) or a connecting conduit (342).

15. Laboratory instrument (100, 200, 300, 400, 500) according to one of the claims 1 to 14, **characterized in that** the at least one multifunctional work head (120, 220, 320, 520) is arranged on the base housing (110, 210) with the additional capability of being moved vertically up and down relative to the container platform (131, 231, 331, 531) .

16. Laboratory instrument (100, 200, 300, 400, 500) according to claim 15, **characterized in that** the at least one protective wall (101, 102, 103, 104, 105) which comprises the cutout (109, 209, 309, 509) is vertically movable together with the at least one multifunctional work head (120, 220, 320, 520).

17. Laboratory instrument (100, 200, 300, 400, 500) according to one of the claims 1 to 16, **characterized in that** the container platform (131, 231, 331, 531) is arranged with the capability of vertical movement relative to the at least one multifunctional work head (120, 220, 320, 520).

## Revendications

1. Appareil de laboratoire (100, 200, 300, 400, 500) pour la mise à disposition d'échantillons, comprenant un boîtier de base (110, 210) avec une chambre de mise à disposition (130, 230, 330, 530) entourée par des parois de protection (101, 102, 103, 104, 105, 106), et avec au moins une tête multifonctions (120, 220, 320, 520) montée de façon rotative autour d'un axe de rotation (121, 221, 521) sur le boîtier de base (110, 210), laquelle présente au moins deux positions fonctionnelles définies (122, 123, 124), et chacune de ces positions fonctionnelles (122, 123, 124) pouvant être orientée au moyen d'une rotation de la tête multifonctions (120, 220, 320, 520) vers au moins une admission de récipient (131, 231, 331, 531) agencée dans la chambre de mise à disposition (130, 230, 330, 530), la première position fonctionnelle (122, 123, 124) contenant un dispositif de réception (126, 326) destiné à recevoir un dispositif de dosage (140, 240, 340) avec un produit fluide à doser, et chaque autre position fonctionnelle (122, 123, 124) comportant respectivement un dispositif supplémentaire, au moins une paroi de protection (101, 102, 103, 104, 105, 106) présentant une brèche (109, 209, 309, 509) et l'au moins une tête multifonctions (120, 220, 320, 520) étant partiellement disposée dans la brèche (109, 209, 309, 509), de manière à ce qu'une partie de la tête multifonctions (120, 220, 320, 520) se trouve à l'extérieur de la chambre de mise à disposition (130, 230, 330, 530) et à ce que l'autre partie de la tête multifonctions (120, 220, 320, 520) se trouve à l'intérieur de la chambre de mise à disposition (130, 230, 330, 530), **caractérisé en ce que** les dispositifs supplémentaires comportent des dispositifs supplémentaires pour la réception de dispositifs de dosage (140, 240, 340, 341) ou des dispositifs (127, 128, 209, 341, 345) présentant d'autres fonctions, et **en ce qu'**une partie de la tête multifonctions (120, 220, 320, 520) se trouve à l'extérieur de la chambre de mise à disposition (130, 230, 330, 530), les positions fonctionnelles (122, 123, 124) agencées à l'extérieur de la chambre de mise à disposition (130, 230, 330, 530) restant par conséquent toujours accessibles.

2. Appareil de laboratoire (100, 200, 300, 400, 500) selon la revendication 1, **caractérisé en ce qu'**une cellule de pesage (234) est agencée dans le boîtier de base (110, 210), et **en ce qu'**au moins une admission de récipient (131, 231, 331, 531) est reliée à la cellule de pesage (234).

3. Appareil de laboratoire (100, 200, 300, 400, 500) selon la revendication 1 ou 2, **caractérisé en ce que** l'axe de rotation (121, 221, 521) de l'au moins une tête multifonctions (120, 220, 320, 520) est agencée horizontalement ou verticalement.

4. Appareil de laboratoire (100, 200, 300, 400, 500) selon l'une des revendications 1 à 3, **caractérisé en ce que** l'au moins une brèche (109, 209, 309, 509) s'étend dans au moins deux parois de protection (101, 102, 103, 104, 105, 106) adjacentes.

5. Appareil de laboratoire (100, 200, 300, 400, 500) selon l'une des revendications 1 à 4, **caractérisé en ce que** l'au moins une tête multifonctions (120, 220, 320, 520) peut coulisser linéairement et/ou pivoter, pour dégager au moins partiellement l'ouverture de la brèche (109, 209, 309, 509).

6. Appareil de laboratoire (100, 200, 300, 400, 500) selon l'une des revendications 1 à 4, **caractérisé en ce que** l'au moins une tête multifonctions (120, 220, 320, 520) présente une position fonctionnelle supplémentaire avec une libération (225), pour le dégagement au moins partiel de l'ouverture de la brèche (109, 209, 309, 509).

7. Appareil de laboratoire (100, 200, 300, 400, 500) selon l'une des revendications 1 à 6, **caractérisé en ce que** l'au moins une tête multifonctions (120, 220, 320, 520) peut coulisser linéairement le long de son axe de rotation (121, 221, 521) et comporte un premier plan (513) et au moins un deuxième plan (514) agencés orthogonalement à l'axe de rotation (121, 221, 521), au moins une première position fonctionnelle (522) étant formée dans le premier plan (513) et une autre position fonctionnelle (525) étant formée dans l'au moins un deuxième plan (514) sur la tête multifonctions (120, 220, 320, 520).

8. Appareil de laboratoire (100, 200, 300, 400, 500) selon l'une des revendications 1 à 7, **caractérisé en ce qu'**un dispositif d'étanchéité (346, 347, 547) est agencé dans la région de la brèche (109, 209, 309, 509).

9. Appareil de laboratoire (100, 200, 300, 400, 500) selon la revendication 8, **caractérisé en ce que** le dispositif d'étanchéité (346, 347, 547) est une baguette d'étanchéité (346) élastique, une brosse d'étanchéité ou un rouleau d'étanchéité, agencé(e) entre la paroi de protection (101, 102, 103, 104, 105, 106) et l'au moins une tête multifonctions (120, 220, 320, 520).

10. Appareil de laboratoire (100, 200, 300, 400, 500) selon la revendication 8 ou 9, **caractérisé en ce que** le dispositif d'étanchéité (346, 347, 547) est une coiffe (347, 547) ou un couvercle recouvrant entièrement la brèche (109, 209, 309, 509) et chevauchant la partie de l'au moins une tête multifonctions (120, 220, 320, 520) qui se trouve à l'extérieur de la chambre de mise à disposition (130, 230, 330, 530).

11. Appareil de laboratoire (100, 200, 300, 400, 500) selon l'une des revendications 8 à 10, **caractérisé en ce qu'**un dispositif de nettoyage (481) est agencé dans la région du dispositif d'étanchéité (346, 347, 547), pour le nettoyage de la tête multifonctions (120, 220, 320, 520) et/ou du dispositif d'étanchéité (346, 347, 547).

12. Appareil de laboratoire (100, 200, 300, 400, 500) selon l'une des revendications 1 à 11, **caractérisé en ce que** l'au moins une tête multifonctions (120, 220, 320, 520) présente une forme de base cylindrique.

13. Appareil de laboratoire (100, 200, 300, 400, 500) selon l'une des revendications 1 à 12, **caractérisé en ce que** le dispositif supplémentaire est un dispositif d'admission (126, 326) pour un dispositif de dosage (140, 240, 340), une unité électro-optique (345, 356) destinée à identifier et/ou à positionner un récipient cible (160, 360, 460) sur l'admission de récipient (131, 231, 331, 531), un dispositif destiné à éliminer ou à placer un moyen de fermeture (161) d'un récipient cible (160, 360, 460), un grappin destiné à saisir des objets, un dispositif de dosage de liquide (341), un dispositif d'admission (126, 326) pour un dispositif de dosage de liquide (341) ou au moins l'ouverture d'évacuation d'un dispositif de dosage de liquide (341), un capteur destiné à détecter des charges électrostatiques, un ionisateur, un appareil d'identification, un capteur d'espacement (345, 356) ou un dispositif de nettoyage (481).

14. Appareil de laboratoire (100, 200, 300, 400, 500) selon l'une des revendications 1 à 13, **caractérisé en ce que** l'au moins une tête multifonctions (120, 220, 320, 520) comporte au moins une zone de raccordement (343) pour un récipient de prélèvement (344) ou une conduite de liaison (342).

15. Appareil de laboratoire (100, 200, 300, 400, 500) selon l'une des revendications 1 à 14, **caractérisé en ce que** l'au moins une tête multifonctions (120, 220, 320, 520) est en outre agencée de manière à pouvoir coulisser dans la direction verticale par rapport à l'admission de récipient (131, 231, 331, 531) sur le boîtier de base (110, 210).

16. Appareil de laboratoire (100, 200, 300, 400, 500) selon la revendication 15, **caractérisé en ce que** l'au moins une paroi de protection (101, 102, 103, 104, 105) pourvue de la brèche (109, 209, 309, 509) peut coulisser verticalement ensemble avec l'au moins une tête multifonctions (120, 220, 320, 520).

17. Appareil de laboratoire (100, 200, 300, 400, 500) selon l'une des revendications 1 à 16, **caractérisé en ce que** l'admission de récipient (131, 231, 331, 531) est agencée de façon à pouvoir coulisser dans la direction verticale par rapport à l'au moins une tête multifonctions (120, 220, 320, 520).
